Europäisches Patentamt

European Patent Office

Office européen des brevets

(19)

(11) Numéro de publication : **0 347 293 B1**

(12)

# FASCICULE DE BREVET EUROPEEN

(45) Date de publication du fascicule du brevet :
06.11.91 Bulletin 91/45

(51) Int. Cl.⁵ : **B60Q 3/06, H01H 3/16**

(21) Numéro de dépôt : **89401614.6**

(22) Date de dépôt : **09.06.89**

(54) **Dispositif de contact électrique actionnable par une porte.**

(30) Priorité : **13.06.88 FR 8807849**

(43) Date de publication de la demande :
**20.12.89 Bulletin 89/51**

(45) Mention de la délivrance du brevet :
**06.11.91 Bulletin 91/45**

(84) Etats contractants désignés :
**DE GB IT**

(56) Documents cités :
**US-A- 2 101 748**
**US-A- 3 692 992**

(73) Titulaire : **AUTOMOBILES PEUGEOT**
**75, avenue de la Grande Armée**
**F-75116 Paris (FR)**
Titulaire : **AUTOMOBILES CITROEN**
**62 Boulevard Victor-Hugo**
**F-92200 Neuilly-sur-Seine (FR)**

(72) Inventeur : **Lefort, Michel**
**151 Boulevard de Charonne**
**F-75011 Paris (FR)**
Inventeur : **Besnard, Alain**
**12 Route de Versailles Rocquencourt**
**F-78150 Le Chesnay (FR)**

(74) Mandataire : **Durand, Yves Armand Louis et al**
**CABINET WEINSTEIN 20, Avenue de**
**Friedland**
**F-75008 Paris (FR)**

Jouve, 18, rue Saint-Denis, 75001 PARIS

## Description

La présente invention a essentiellement pour objet un dispositif de contact électrique actionnable par une porte susceptible d'obturer un espace tel que par exemple celui constitué par le coffre à bagages d'un véhicule automobile.

On sait que, dans un véhicule automobile, la partie arrière et basse du coffre à bagages est généralement constituée par une paroi permettant l'accostage de la porte du coffre.

Plus précisément, cette paroi comporte une ouverture ou découpe permettant l'accès à une gâche de verrouillage de la porte du coffre. En outre, cette découpe ou ouverture permet d'accéder à la gâche pour effectuer sa fixation et/ou son réglage.

Or, une telle découpe doit être relativement importante ce qui, comme on le comprend, est désavantageux non seulement sur le plan de l'esthétique mais aussi parce que des petits objets peuvent tomber dans ladite découpe.

Il convient par conséquent de supprimer ou, à tout le moins de réduire cette découpe ou ouverture, sans pour cela empêcher l'accès à la gâche et aux moyens permettant sa fixation et/ou son réglage.

Tel est donc le compromis ou le problème auquel la présente invention apporte une solution dont, par ailleurs, on tire profit pour incorporer, précisément à l'endroit de la découpe ou ouverture précitée, un système d'éclairage du coffre à bagages du véhicule.

A cet effet, l'invention a pour objet un dispositif de contact électrique actionnable par une porte susceptible d'obturer un espace, tel que par exemple celui du coffre à bagages d'un véhicule automobile, et du type comprenant au moins deux contacts à lames coopérantes permettant par exemple l'éclairage dudit espace (voir US-A-3692992), caractérisé en ce que l'un de ces contacts ou premier contact est porté par un volet qui est monté articulé sur une paroi délimitant ledit espace et qui est sollicité en permanence par des moyens de rappel contre une ouverture pratiquée dans ladite paroi pour obturer cette ouverture au moins en partie, tandis que l'autre ou deuxième contact est solidaire du bord de ladite ouverture, et soit coopère avec le premier contact lorsque le volet est fermé et appliqué contre ladite ouverture alors que la porte est ouverte, soit est hors contact avec ledit premier contact lorsque le volet est ouvert à l'encontre de la force des moyens de rappel sous l'effet de la fermeture de la porte.

Autrement dit, on comprend que l'ouverture et la fermeture de la porte coopérant avec le volet précité obturant l'ouverture dans la paroi permettront l'éclairage ou non de l'espace constitué par le coffre à bagages.

Suivant une autre caractéristique de l'invention, le premier contact précité est constitué par une lame portée par une languette faisant saillie du volet et retenue en position fermée de celui-ci, contre le dessous du bord de l'ouverture qui porte le deuxième contact.

On précisera ici que le volet en position fermée, de même que le deuxième contact, sont avantageusement intégrés à la paroi précitée.

Selon encore une autre caractéristique de l'invention, en dessous du volet précité, est située une gâche en partie visible par l'ouverture précitée lorsque le volet est en position fermée.

Suivant une autre caractéristique du dispositif de l'invention, les moyens de rappel précités sont constitués par au moins un ressort fixé par une extrémité sur le dessous du volet et par son autre extrémité sur une pièce solidaire de la paroi précitée.

On ajoutera ici que la gâche précitée et le volet en position ouverte définissent un espace apte à permettre le passage d'un outil au travers de l'ouverture dans la paroi pour fixer et régler ladite gâche.

Suivant une application particulière, la paroi précitée constitue la partie basse d'entrée du coffre à bagages d'un véhicule automobile.

Mais d'autres caractéristiques et avantages de l'invention apparaîtront mieux dans la description détaillée qui suit et se réfère aux dessins annexés, donnés uniquement à titre d'exemple et dans lesquels :

La figure 1 est une vue en perspective et de dessous du volet en position fermée ;

La figure 2 est une vue en élévation et en coupe verticale de la partie basse et d'entrée du coffre à bagages d'un véhicule, et au-dessus de laquelle on voit en partie et en coupe la partie d'extrémité d'une porte d'obturation de ce coffre à bagages ;

La figure 3 est une vue en coupe suivant la ligne III-III de la figure 2 ;

La figure 4 est une vue en coupe verticale identique à celle de la figure 2, mais montrant la porte en position verrouillée sur la partie basse du coffre à bagages ; et

La figure 5 est une vue en coupe montrant essentiellement la gâche et le volet en position ouverte, ainsi qu'un outil passant entre ces deux éléments.

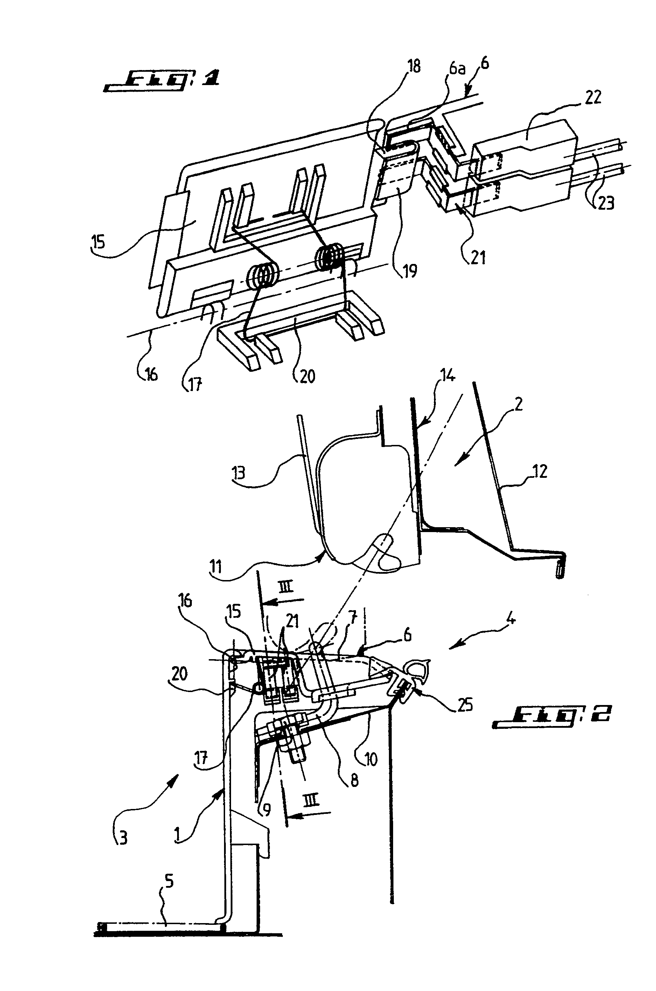

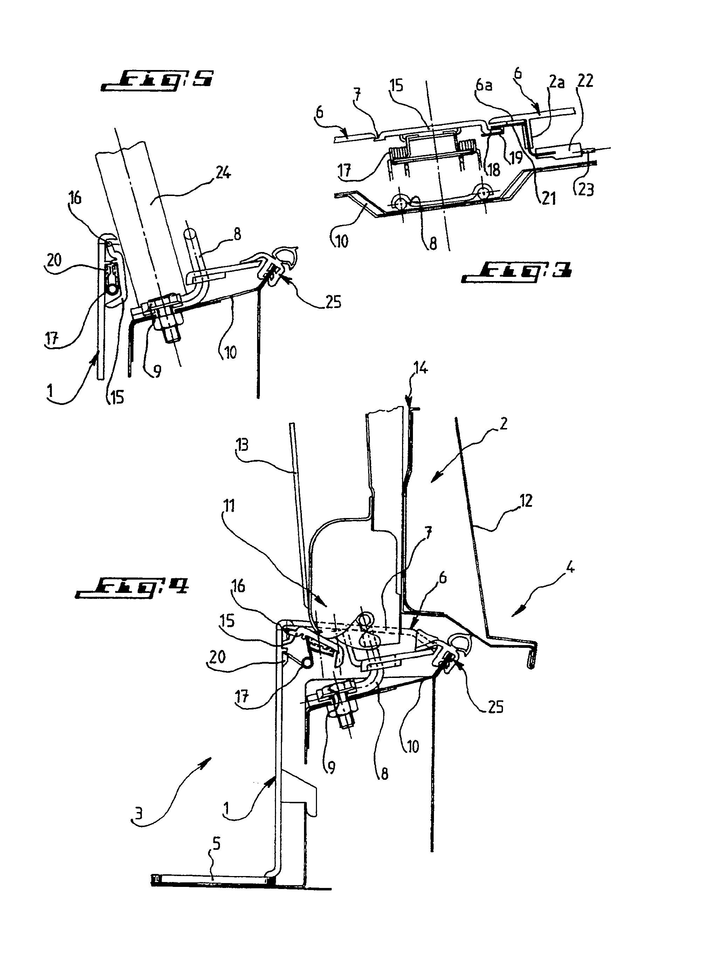

En se reportant plus particulièrement aux figures 2 et 4, on voit en 1 une paroi constituant la partie basse ou d'entrée d'un coffre à bagages obturable par une porte 2, isolant l'intérieur 3 du coffre de l'extérieur 4.

La paroi 1 recouvre en partie basse un tapis 5 constituant en quelque sorte le plancher du coffre. En partie haute, la paroi 1 se prolonge par une partie sensiblement horizontale 6 comportant une découpe ou ouverture 7 à travers laquelle est visible une gâche 8 fixée par une vis 9 sur la traverse arrière 10 du coffre. Bien entendu, la gâche 8 peut coopérer avec une serrure 11 solidaire de la partie basse de la porte 2.

On a montré en 25 un profilé d'étanchéité et de finition sur lequel vient s'accoster la partie sensiblement horizontale 6 de la paroi 1 et la traverse 10 du coffre située sous et protégée par ladite partie 6.

La porte 2 comporte des tôles formant garniture extérieure 12 et intérieure 13, ainsi qu'une armature ou doublure 14.

Toutes les dispositions ci-dessus sont bien connues et ne nécessitent pas d'explications complémentaires.

Conformément à l'invention, et comme on le voit bien sur la figure 1, un volet 15 est articulé en 16 sur la paroi 1 et est constamment sollicité par des moyens de rappel tels qu'un ressort 17 contre l'ouverture ou découpe 7 pratiquée dans la partie 6 sensiblement horizontale de la paroi 1, afin d'obturer en partie cette ouverture qui est généralement importante et disgracieuse.

Le volet 15, lorsqu' il est en position fermée, comme on le voit bien sur les figures 2 et 3, est en quelque sorte intégré à la paroi 1, en ce sens que sa forme est telle qu'il réalise une continuité avec la partie 6 de la paroi 1.

Ce volet 15 comporte, sur le côté, une languette en saillie 18 qui porte une lame métallique électriquement conductrice 19 formant un premier contact.

On a montré en 20 sur les figures 1, 2, 4 et 5 une pièce fixée sur la paroi 1 et qui retient l'une des extrémités du ressort 17, dont l'autre extrémité est retenue par des moyens appropriés sous le volet 15.

Sous le bord de l'ouverture 7, c'est-à-dire plus précisément, comme on le voit mieux sur les figures 1 et 3, sur la face inférieure 6a de la partie sensiblement horizontale 6 de la paroi 1, est prévu un deuxième contact constitué par des lames électriquement conductrices 21 et susceptibles de coopérer avec le premier contact 19. Ce deuxième contact, tout comme le premier contact est intégré à la partie 6 de la paroi 1, comme on peut le comprendre en se reportant plus particulièrement à la figure 3.

On a montré en 22 un connecteur relié par une filerie 23 à une source d'alimentation en courant (non représentée), et cela de façon à constituer un circuit électrique permettant d'assurer automatiquement par exemple l'éclairage et l'interruption de l'éclairage du coffre par coopération ou non des contacts 19 et 21.

Mais, pour une meilleure compréhension de l'invention, on en expliquera ci-après brièvement le fonctionnement, en se reportant plus particulièrement aux figures 2 et 4.

Lorsque la porte 2 est ouverte, comme on le voit sur la figure 2, le volet 15 est en position fermée et appliqué contre l'ouverture 7, de sorte que les contacts 19 et 21 se touchent et ferment le circuit électrique, sous l'effet de la force du ressort 17, ce qui provoquera l'éclairage du coffre.

Lorsqu' on ferme la porte 2 du coffre, comme on le voit sur la figure 4, la serrure 11 de ladite porte repoussera le volet 15 à l'encontre de la force du ressort 17, de sorte que le circuit électrique sera ouvert et l'éclairage du coffre interrompu, puisque les lames 19 et 21 seront hors contact.

On a donc réalisé suivant l'invention, un système d'obturation partielle de l'ouverture de gâche à la partie basse d'un coffre à bagages de véhicule, ce système incorporant avantageusement un interrupteur électrique réalisant automatiquement l'éclairage du compartiment du coffre à l'ouverture de la porte de ce coffre, et l'arrêt de cet éclairage à la fermeture de la porte.

On remarquera ici, en se reportant plus particulièrement à la figure 5 que le volet 15 masquant l'ouverture 7 en affleurant la partie 6 de la paroi 1 peut être facilement escamoté pour permettre l'accès d'un outil 24, tel que par exemple une visseuse, un tournevis ou une clé.

Bien entendu, l'invention n'est nullement limitée au mode de réalisation décrit et illustré qui n'a été donné qu'à titre d'exemple.

C'est ainsi que l'invention pourrait s'appliquer à d'autres volumes que celui d'un coffre à bagages, et que la réalisation du ressort sollicitant le volet et les moyens de fixation de ce ressort peuvent être quelconques, sans sortir du cadre de l'invention.

## Revendications

1. Dispositif de contact électrique actionnable par une porte (2) susceptible d'obturer un espace, tel que par exemple celui du coffre à bagages d'un véhicule automobile et du type comprenant au moins deux contacts à lames coopérantes (19, 21) permettant par exemple l'éclairage dudit espace, caractérisé en ce que l'un de ces contacts ou premier contact (19) est porté par un volet (15) qui est monté articulé sur une paroi (1) délimitant ledit espace et qui est sollicité en permanence par des moyens de rappel (17) contre une ouverture (7) pratiquée dans ladite paroi pour obturer cette ouverture au moins en partie, tandis que l'autre ou deuxième contact (21) est solidaire du bord de ladite ouverture (7), et soit coopère avec le premier contact (19) lorsque le volet (15) est fermé et appliqué contre ladite ouverture alors que la porte (2) est ouverte, soit est hors contact avec ledit premier contact (19) lorsque le volet (15) est ouvert à l'encontre de la force des moyens de rappel (17) sous l'effet de la fermeture de la porte (2).

2. Dispositif selon la revendication 1, caractérisé en ce que le premier contact précité (19) est constitué par une lame portée par une languette (18) faisant saillie du volet (15) et retenue en position fermée de celui-ci, contre le dessous du bord de l'ouverture (7) qui porte le deuxième contact (21).

3. Dispositif selon la revendication 1 ou 2, caractérisé en ce que le volet précité (15) en position fermée de même que le deuxième contact (21) sont intégrés à la paroi précitée (1).

4. Dispositif selon l'une des revendications 1 à 3, caractérisé en ce qu'en dessous du volet précité est située une gâche (8) en partie visible par l'ouverture précitée lorsque le volet (15) est en position fermée.

5. Dispositif selon l'une des revendications 1 à 4, caractérisé en ce que les moyens de rappel précités (17) sont constitués par au moins un ressort fixé par une extrémité sur le dessous du volet et par son autre extrémité sur une pièce (20) solidaire de la paroi précitée (1).

6. Dispositif selon l'une des revendications précédentes, caractérisé en ce que la gâche précitée (8) et le volet (15) en position ouverte définissent un espace apte à permettre le passage d'un outil (24) au travers de l'ouverture (7) dans la paroi (1) pour fixer et régler ladite gâche (8).

7. Dispositif selon l'une des revendications précédentes, caractérisé en ce que la paroi précitée (1) constitue la partie basse d'entrée du coffre à bagages d'un véhicule automobile.

## Patentansprüche

1. Durch eine, einen Raum wie z.B. denjenigen eines Gepäckraumes eines Kraftfahrzeuges abschliessfähige Tür (2) betätigbare elektrische Kontaktvorrichtung der mit wenigstens zwei z.B. die Beleuchtung des besagten Raumes ermoglichenden Kontakten mit zusammenwirkenden Zungen (19, 21) aufweisenden Gattung, dadurch gekennzeichnet, dass einer dieser Kontakte bzw. der erste Kontakt (19) von einer Klappe (15) getragen wird, die an einer den besagten Raum begrenzenden Wandung (1) gelenkig angeordnet ist und die stetig durch Rückstellmittel (17) in Richtung auf eine in der besagten Wandung gebildete Öffnung zum wenigstens Teilabschliessen dieser Öffnung beaufschlagt wird, während der andere bzw. zweite Kontakt (21) mit dem Rand der besagten Öffnung (7) fest verbunden ist und entweder mit dem ersten Kontakt (19) zusammenwirkt, wenn die Klappe (15) geschlossen ist und an der besagten Öffnung anliegt, während die Tür (2) offen ist, oder ausser Berührung mit dem besagten ersten Kontakt (19) steht, wenn die Klappe (15) entgegen der Kraft der Rückstellmittel (17) unter der Wirkung des Schliessens der Tür (2) geöffnet wird.

2. Vorrichtung nach Anspruch 1, dadurch gekennzeichnet, dass der vorgennante erste Kontakt (19) durch ein von einer von der Klappe (15) abstehenden Zunge (18) getragenes Blatt gebildet wird, wobei die Zunge in Schliessstellung an der Unterseite des Randes der Öffnung (7), der den zweiten Kontakt (21) trägt, zurückgehalten wird.

3. Vorrichtung nach Anspruch 1 oder 2, dadurch gekennzeichnet, dass die vorgennante Klappe (15) in Schliessstellung so wie der zweite Kontakt (21) in die vorgennante Wandung (1) einbezogen sind.

4. Vorrichtung nach einem der Ansprüche 1 bis 3, dadurch gekennzeichnet, dass unterhalb der vorgennanten Klappe eine durch die vorgennante Öffnung hindurch bei geschlossener Stellung der Klappe (15) teilweise sichtbare Schlossraste (8) liegt.

5. Vorrichtung nach einem der Ansprüche 1 bis 4, dadurch gekennzeichnet, dass die vorgennanten Rückstellmittel (17) durch wenigstens eine Feder gebildet werden, die mit einem Ende an der Unterseite der Klappe und mit ihrem anderen Ende an einem mit der vorgennanten Wandung (1) fest verbundenen Teil (20) befestigt ist.

6. Vorrichtung nach einem der vorangehenden Ansprüche, dadurch gekennzeichnet, dass die vorgennanten Schlossraste (8) und die Klappe (15) in Offenstellung einem Raum begrenzen, der fähig ist, die Durchführung eines Werkzeugs (24) durch die Öffnung (7) in der Wandung (1) hindurch, um die besagte Türraste (8) zu befestigen und einzustellen, zu gestatten.

7. Vorrichtung nach einem der vorangehenden Ansprüche, dadurch gekennzeichnet, dass die vorgennante Wandung (1) den unteren Einlassteil des Kofferraumes eines Kraftfahrzeugs bildet.

## Claims

1. Electrical contact device operable by a door (2) adapted to close a space such for example as a luggage boot of an automotive vehicle and of the type comprising at least two contacts with co-operating blades (19, 21) permitting for example the illumination of the said space, characterized in that one of these contacts or first contact (19) is carried by a flap (15) which is pivotally mounted onto a wall (1) limiting the said space and which is permanently urged by return means (17) towards an opening (7) formed in the said wall to close this opening at least in part whereas the other or second contact (21) is made fast to the edge of the said opening (7) and either co-operates with the first contact (19) when the flap (15) is closed and applied onto the said opening while the door (2) is open or out of contact with the said first contact (19) when the flap (15) is opened against the force of the return means (17) under the effect of the shutting of the door (2).

2. Device according to claim 1, characterized in that the aforesaid first contact (19) is constituted by a blade carried by a tongue (18) projecting from the flap (15) and retained in the closed position of the latter against the under side of the edge of the opening (7) which carries the second contact (21).

3. Device according to claim 1 or 2, characterized in that the aforesaid flap (15) in the closed position as well as the second contact (21) are integrated into the aforesaid wall (1).

4. Device according to one of claims 1 to 3, characterized in that underneath the aforesaid flap is located a lock keeper (8) visible in part through the aforesaid opening when the flap (15) is in the closed position.

5. Device according to one of claims 1 to 4, characterized in that the aforesaid return means (17) are constituted by at least one spring fastened with one end to the underside of the flap and with its other end onto a part (20) made fast to the aforesaid wall (1).

6. Device according to one of the preceding claims, characterized in that the aforesaid lock keeper (8) and the flap (15) in the open position define a space adapted to permit the passage of a tool (24) through the opening (7) in the wall (1) for fastening and adjusting the said lock keeper (8).

7. Device according to one of the foregoing claims, characterized in that the aforesaid wall (1) constitutes the lower inlet portion of the luggage boot of an automotive vehicle.

Fig. 1

Fig. 2

Fig. 5

Fig. 3

Fig. 4